# EUROPEAN PATENT APPLICATION

(11) **EP 1 840 737 A1**
(43) Date of publication of application: **03.10.2007**
(21) Application number: 07001097.0
(22) Date of filing: 19.01.2007
(51) Int. Cl.: G06F 9/44

(54) **Systems and methods for swapping program configuration data**

(30) Priority: 28.03.2006 CN 200610071443
(71) Applicant: BenQ Corporation, Gueishan Taoyung 333 (TW)
(72) Inventor: Chang, Chih-Cheng, Anle District Keelung City 204 (TW)
(74) Representative: Hrovat, Andrea Darinka

(57) **Abstract**

A method for swapping program configuration data comprises the following steps. A program profile table comprising a first program number and a first primary key for mapping to first program configuration data, and a second program number and a second primary key for mapping to second program configuration data is established. The first primary key in the program profile table is swapped for the second primary key.

## Description

### BACKGROUND

The invention relates to display apparatuses, and more particularly, to systems and methods for swapping program configuration data.

Televisions (TVs) are typically equipped with a system for swapping program configuration data. The conventional data structure for storing a program list containing program configuration data, however, is not optimized for efficient swapping of program configuration data. The swapping of program configuration data may consume excessive time, decreasing user convenience. Thus, an efficient method for swapping program configuration data and a system thereof to reduce swapping time is desirable.

### SUMMARY

The invention provides an efficient method for swapping program configuration data and a system thereof to reduce swapping time.

Methods for swapping program configuration data, employed to swap first program configuration data corresponding to a first program number for second program configuration data corresponding to a second program number in an electronic apparatus, are provided. An embodiment of a method for swapping program configuration data comprises the following steps. In step (a), a program profile table comprising the first program number and a first primary key for mapping to the first program configuration data, and the second program number and a second primary key for mapping to the second program configuration data is established. In step (b), the first primary key in the program profile table is swapped for the second primary key. The electronic apparatus may be a CRT display, a plasma display panel (PDP) display, a liquid crystal display (LCD), an organic light-emitting diode display (OLED) or a TV box.

In some embodiments, the first program configuration data comprises a first index, and the second program configuration data comprises a second index. In step (a), the first and second primary keys in the program profile table are respectively linked to the first and second indices, thereby enabling the first and second program numbers in the program profile table to map to the first and second configuration data. In step (b), after swapping the first primary key for the second primary key in the program profile table, the first and second program numbers are respectively linked to the second and first indices via the second and first primary keys for respectively mapping to the second and first program configuration data.

In some embodiments, the second configuration data comprises a second frequency, a second video standard and a second audio standard. The method further comprises the following steps after step (b). In step (c), the second frequency of the second program configuration data is acquired from the program configuration table, and the second frequency is locked on to. In step (d), the second video standard of the second program configuration data is acquired from the program configuration table, and video data carried by the second frequency is decoded based on the second video standard. In step (e), the second audio standard of the second program configuration data is acquired from the program configuration table, and audio data carried by the second frequency is decoded based on the second audio standard. In step (f), the decoded video and audio data are outputted. The orders of any two of the steps (c), (d) and (e) can be exchanged. Before step (c), the electronic apparatus originally outputs video and audio data based on the first program configuration data. In other words, the electronic apparatuses originally plays the program content of the first program, and, after executing the method for swapping program configuration data, the program content of the first program shifts to correspond to the second program, and the program content of the second program shifts to correspond to the first program. In the meanwhile, the electronic apparatus plays the program content of the first program after swapping program configuration data, i.e., the electronic apparatus plays the program content of the second program before swapping program configuration data.

In some embodiments, the electronic apparatus further stores a program status table comprising the first program number, a first valid flag, the second program number and a second valid flag. The first and second valid flags respectively indicate whether the first and second program numbers are associated with valid frequencies. Step (b) further comprises swapping the first valid flag corresponding to the first program number for the second valid flag corresponding to the second program number in the program status table.

In some embodiments, the program profile table further comprises a first reserved flag and a second reserved flag respectively indicating whether the first and second program numbers are in a reserved status or an unreserved status. Step (b) further comprises setting the first reserved flag corresponding to the first program number, and the second reserved flag corresponding to the second program number to the unreserved statuses.

As described, methods for swapping program configuration data, introduced by the invention, do not directly swap program configuration data. In order to swap program configuration data, the method establishes a relationship between program configuration data and primary keys, and swaps primary keys.

Systems for swapping program configuration data, wherein first program configuration data corresponding to a first program number is swapped for second program configuration data corresponding to a second program number in an electronic apparatus, are provided. An embodiment of a system for swapping program configuration data comprises a memory device and a processing unit. The memory device stores the first and second program configuration data, and a program profile table. The program configuration table comprises the first program number and a first primary key for mapping to the first program configuration data, and the second program number and a second primary key for mapping to the second program configuration data. The processing unit swaps the first primary key in the program profile table for the second primary key. The electronic apparatus may be a CRT display, a plasma display panel (PDP) display, a liquid crystal display (LCD), an organic light-emitting diode display (OLED) or a TV box.

In some embodiments, the first program configuration data comprises a first index, and the second program configuration data comprises a second index. The first and second primary keys in the program profile table are respectively linked to the first and second indices, thereby enabling the first and second program numbers in the program profile table to map to the first and second configuration data. After the processing unit swaps the first primary key for the second primary key in the memory device, the first and second program numbers are respectively linked to the second and first indices via the second and first primary keys for respectively mapping to the second and first program configuration data.

In some embodiments, the second configuration data in the memory device comprises a second frequency, a second video standard and a second audio standard. The processing unit further acquires the second frequency, the second video standard and the second audio standard from the second program configuration data in the memory device. The system further comprises a tuner, a video encoder, an audio processor and an output unit. The tuner locks on to the second frequency. The video decoder decodes video data carried by the second frequency based on the second video standard. The audio processor decodes audio data carried by the second frequency based on the second audio standard. The output unit outputs the decoded video and audio data. In other words, the electronic apparatuses originally plays the program content of the first program, and, after executing the method for swapping program configuration data, the program content of the first program shifts to correspond to the second program, and the program content of the second program shifts to correspond to the first program. At the same time, the electronic apparatus plays the program content of the first program after swapping program configuration data, i.e., the electronic apparatus plays the program content of the second program before swapping program configuration data.

In some embodiments, the memory device further stores a program status table comprising the first program number, a first valid flag, the second program number and a second valid flag. The first and second valid flags respectively indicate whether the first and second program numbers are associated with valid frequencies. After swapping the first primary key for the second primary key in the memory device, the processing unit further swaps the first valid flag corresponding to the first program number for the second valid flag corresponding to the second program number in the program status table.

In some embodiments, the program profile table in the memory device further comprises a first reserved flag and a second reserved flag respectively indicating whether the first and second program numbers are in a reserved status or an unreserved status. After swapping the first primary key for the second primary key in the memory device, the processing unit further sets the first reserved flag corresponding to the first program number, and the second reserved flag corresponding to the second program number to the unreserved statuses.
As described, systems for swapping program configuration data, introduced by the invention, do not directly swap program configuration data. To swap program configuration data, the system establishes the relationship between program configuration data and primary keys, and swaps primary keys.

### BRIEF DESCRIPTION OF DRAWINGS

The invention will become more fully understood by referring to the following detailed description with reference to the accompanying drawings, wherein:
- Fig. 1: is a diagram of the system architecture applicable to an embodiment of a system for swapping program configuration data;
- Fig. 2: is a diagram of exemplary data structure;
- Figs. 3 and 4: are flowcharts of embodiments of a method for swapping program configuration data;
- Figs. 5a and 6a: are diagrams of exemplary program profile tables in various aspects;
- Figs. 5b and 6b: are diagrams of exemplary program status tables in various aspects;
- Fig. 5c: is a diagram of an exemplary program configuration table.

### DETAILED DESCRIPTION

The term "program" herein refers to a medium of communication or access. In other district outside of Europe, such as the U.S.A, "program" is usually called "channel". Hence, a method, system or medium storage for program changing has equivalent interpretation as a method, system, or medium storage for channel changing.

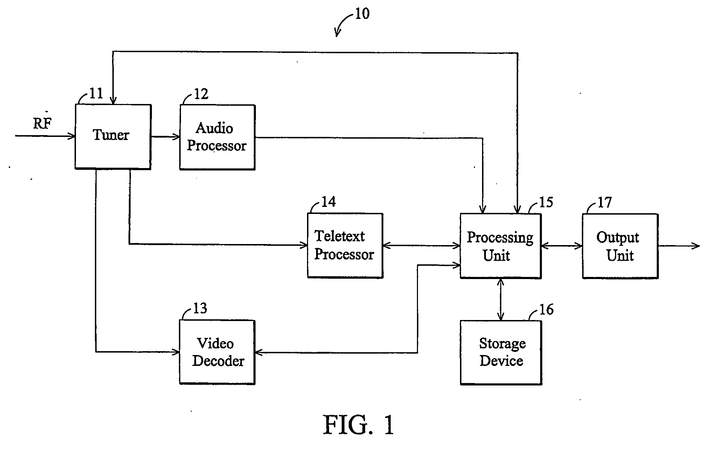

Fig. 1 is a diagram of the system architecture applicable to an embodiment of a system 10 for swapping program configuration data comprising a tuner 11, an audio processor 12, a video decoder 13, a teletext processor 14, a processing unit 15, a memory device 16 and an output unit 17. The system 10 for swapping program configuration data 10 may be installed in TV boxes, or in various display apparatuses such as CRT displays, plasma display panel (PDP) displays, liquid crystal displays (LCDs), organic light-emitting diode displays (OLEDs) and others. The memory device 16 may be read only memory (ROM), flash memory or random access memory (RAM) to store program modules executed by the processing unit 15. The processing unit 15 loads and executes program modules, with the tuner 11, audio processor 12, video decoder 13 and teletext processor 14, to complete automated program installation. The tuner 11 locks on to a particular frequency, and acquires video and audio signals carried on the frequency. The teletext processor 14 acquires teletext signals. The tuner 11 may first select a specific frequency such as 176.00 MHz, and the video decoder 13, the audio processor 12 and the teletext processor 14 then detect whether the selected frequency carries video, audio or teletext signals capable of being displayed or played. If so, the tuner locks on to the selected frequency. The details for locking on to a particular frequency are well-known in the art, and are only briefly described herein. The output unit 17 outputs the decoded video or audio data.

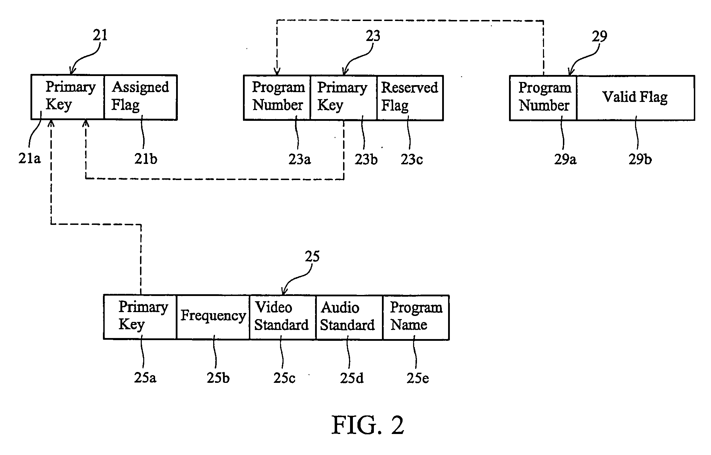

Fig. 2 is a diagram of exemplary data structure. The memory device 16 stores a primary key table 21, a program profile table 23, a program configuration table 25 and a program status table 29. The data structure may be implemented in various storage such as database tables, data objects, file records or similar, in various data management systems such as database management systems, data object management systems, file management systems or similar.

The primary key table 21 contains two fields, primary key 21 a and assigned flag 21b, storing information indicating whether a particular primary key is assigned. For example, a record of the primary key table 21 storing a primary key "1" and an assigned flag "true" or "1" indicates that the primary key "1" has been assigned. A record of the primary key table 21 storing a primary key "2" and an assigned flag "false" or "0" indicates that the primary key "2" has not been assigned.

Referring to Fig. 2, the program profile table 23 contains three fields, program number 23a, primary key 23b and reserved flag 23c, storing information indicating that a primary key is associated with a program number and whether a frequency corresponding to the program number is a reserved program. For example, a record of the program profile table 23 storing a primary key "1", a program number "1" and a reserved flag "true" or "1" indicates that the primary key "1" is associated with the program number "1" and the frequency corresponding to the program number "1" is a reserved program. A record of the program profile table 23 storing a primary key "2", a program number "2" and a reserved flag "false" or "0" indicates that the primary key "2" is associated with the program number "2" and the frequency corresponding to the program number "2" is not a reserved program. The primary key stored in the primary key field 23b of the program profile table 23 can also be a foreign key for associating with a particular record of another table, which has the same primary key.

Referring to Fig. 2, the program configuration table 25 contains five fields, primary key 25a, frequency 25b, video standard 25c, audio standard 25d and program name 25e, storing information indicating that a particular primary key is associated with a frequency, video signals carried by the frequency correspond to a video standard, audio signals carried by the frequency correspond to an audio standard, and the frequency corresponds to a program name. The frequency field 25b may store a number ranging from 0 to 65,535 to represent a particular frequency when two bytes are allocated to store the frequency. The video standard field 25c may store a number ranging from 0 to 3 to represent a particular video standard. The audio standard field 25d may store a number ranging from 0 to 15 to represent a particular audio standard. For example, the video standard field thereof stores "1", "2" and "3" respectively indicating that video signals carried by a particular frequency correspond to the National TV Standards Committee (NTSC) standard, Phase Alternating Line (RAL) standard and Sequential Couleur Avec Memoire (SECAM) standard. The audio standard field thereof stores "1", "2" and "3" respectively indicating that audio signals carried by a particular frequency correspond to the BG, DK and I standards. The primary key stored in the primary key field 25a of the program configuration table 25 can also be a foreign key for associating with a particular record of another table, which has the same primary key.

Referring to Fig. 2, the program status table 29 contains two fields, program number 29a and valid flag 29b, storing information indicating whether a particular program number is associated with a valid frequency. The valid frequency indicates a frequency carrying playable video, audio or teletext data. For example, a record of the program status table 29 storing a program number "1" and a valid flag "true" or "1" indicates that a frequency corresponding to the program number "1" is a valid frequency. A record of the program status table 29 storing a program number "2" and a valid flag "false" or "0" indicates that the program number "2" has not been associated with any frequency or a frequency corresponding to the program number "2" is an invalid frequency. A program number stored in one program number field 29a of the program status table 29 can also be a foreign key for associating with a particular record of another table, which has the same program number. When an application desires to lock on to a frequency corresponding to the next or prior program number, the content of program status table 29 is first inspected to determine whether a frequency corresponding to the next or prior program number is an invalid frequency in order to avoid selecting an invalid program number (i.e. to avoid locking on to an invalid frequency).

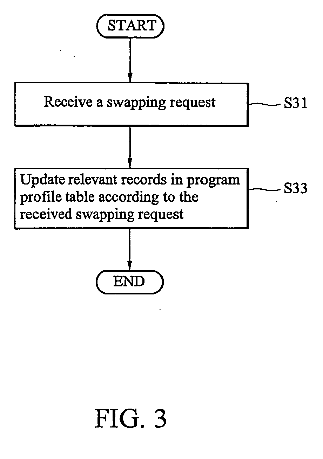

Fig. 3 is a flowchart of an embodiment of a method for swapping program configuration data. The method begins in step S31 to receive a swapping request indicating that configuration data corresponding to the current program number is swapped for that corresponding to another program number. In step S33, relevant records in the program profile table 23 are updated according to the received swapping request. Step S33 may search for a record corresponding to the current program number in the program profile table 23, and a record corresponding to another program number in the program profile table 23, and then, two primary keys 23b of the searched records are swapped.

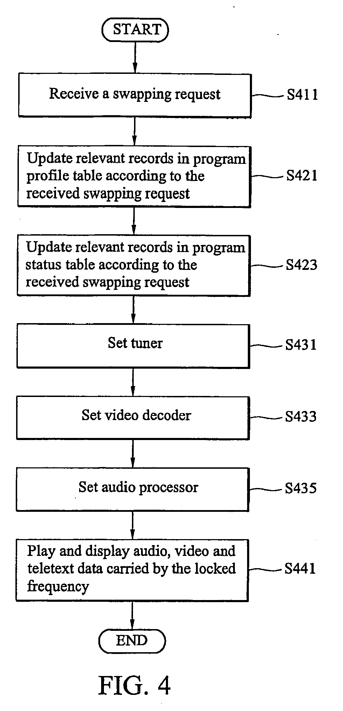

Fig. 4 is a flowchart of an embodiment of a method for swapping program configuration data. The method for swapping program configuration data is employed to swap configuration data corresponding to the current program number, such as frequency, video standard, audio standard, program name and others, for that corresponding to another program number, and lock on to the swapped frequency corresponding to the current program number, resulting in playing audio, video or teletext signals carried by the swapped frequency. The method begins in step S411 to receive a swapping request indicating that configuration data corresponding to the current program number is swapped for that corresponding to another program number. In step S421, relevant records in the program profile table 23 are updated according to the received swapping request. Step S421 may search for a record corresponding to the current program number in the program profile table 23, and a record corresponding to another program number in the program profile table 23, swap for two primary keys 23b of the searched records and set the reserved flags 23c of the searched records to "0" or "false". Note that, when two primary keys 23b of the searched records are swapped, these two program numbers are associated with different program configuration data, i.e. swapped program configuration data, via the swapped primary keys. In addition, because the frequencies corresponding to the current and another program numbers are not reserved frequencies any more, reserved flags 23c of the searched records must be set to "0" or "false". In step S423, relevant records in the program status table 29 are updated according to the received swapping request. Step S423 may search for a record corresponding to the current program number in the program status table 29, and a record corresponding to another program number in the program profile table 29, and swap for two valid flags 29b of the searched records. In step S431, a frequency corresponding to the current program number is set to the tuner 11. Step S431 may search for a record of the program configuration table 25 corresponding to the current program number via the corresponding primary key 23b, acquire the frequency 25b of the searched record, direct the tuner 11 to lock on to the frequency by setting the acquired frequency to the tuner 11. The audio, video and teletext signals carried by the frequency are then acquired. In step S433, the video standard corresponding to the current program number is set to the video decoder 13. Step S433 may search for a record of the program configuration table 25 corresponding to the current program number via the corresponding primary key 23b, acquire video standard 25c of the searched record, and direct the video decoder 13 to decode video data based on the acquired video standard by setting the acquired video standard to the video decoder 13. In step S435, the audio standard corresponding to the current program number is set to the audio processor 12. Step S435 may search for a record of the program configuration table 25 corresponding to the current program number via the corresponding primary key 23b, acquire audio standard 25d of the searched record, and direct the audio processor 12 to decode audio data based on the acquired audio standard by setting the acquired audio standard to the audio processor 12. It is to be understood that the orders of steps S433 and S435 may be exchanged. In step S441, audio, video and teletext data carried by the locked frequency is played and displayed.

Details of the methods for swapping program configuration data are further illustrated in the following examples. The program profile table 23, program status table 29 and program configuration table 25 are respectively shown in Figs. 5a to 5c.

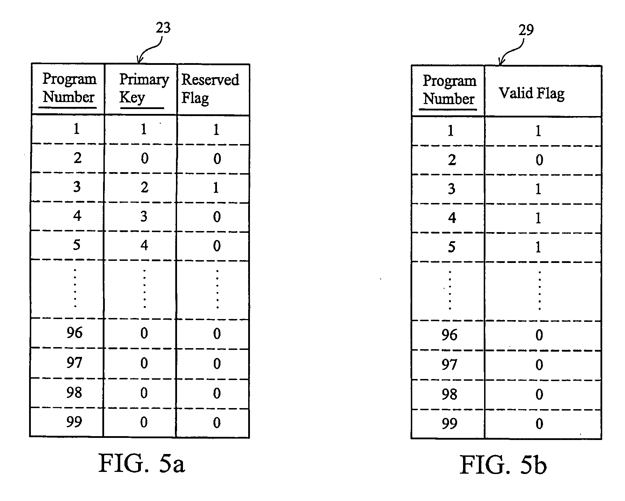

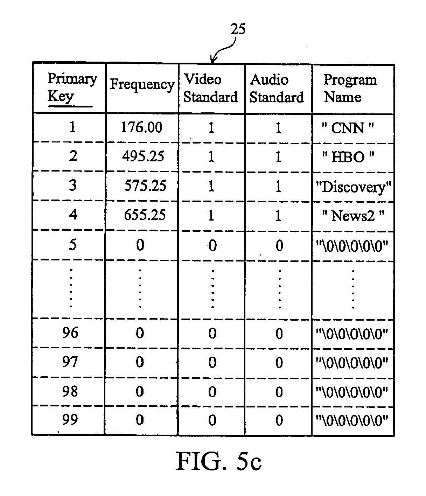

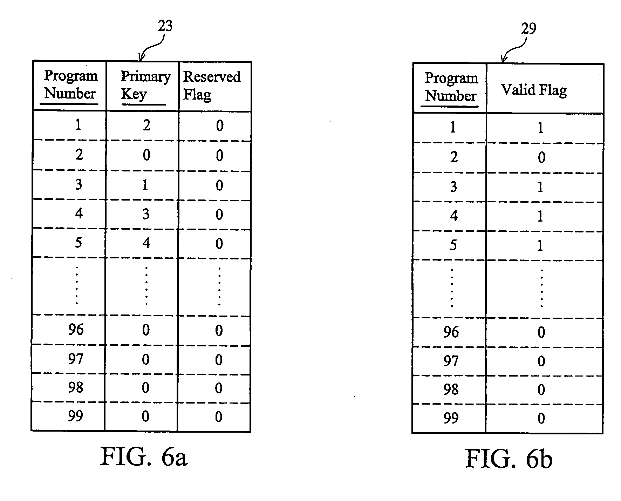

When executing step S411, a swapping request indicating that configuration data corresponding to the current program number "1" is to be swapped for that corresponding to an program number "3" is received. When executing step S421, a record of the program profile table 23 corresponding to the current program number "1" is searched for, a record of the program profile table 23 corresponding to program number "3" (as shown in Fig. 5a) is searched for, two primary keys of the searched records are swapped, and reserved flags of the searched records are set to "0", the modification result as shown in Fig. 6a. When executing step S423, a record of the program status table 29 corresponding to the current program number "1" is searched for, a record of the program status table 29 corresponding to another program number "3" (as shown in Fig. 5b) is searched for, and two valid flags of the searched records are swapped, the modification result as shown in Fig. 6b. The swapping operation executed by the described method is more efficient because it takes no effort to modify the content of the program configuration table 25. When executing step S431, the frequency "495.25" newly corresponding to the program number "1" is set to the tuner 11. When executing step S433, the video standard "1" newly corresponding to the program number "1" is set to the video decoder 13. When executing step S435, the audio standard "1" newly corresponding to the program number "1" is set to the audio processor 12. When executing step S441, audio, video and teletext data carried by the locked frequency "495.25" are displayed and played.

Certain terms are used throughout the description and claims to refer to particular system components. As one skilled in the art will appreciate, consumer electronic equipment manufacturers may refer to a component by different names. This disclosure does not intend to distinguish between components that differ in name but not function.

Although the invention has been described in terms of preferred embodiment, it is not limited thereto. Those skilled in this technology can make various alterations and modifications without departing from the scope and spirit of the invention. Therefore, the scope of the invention shall be defined and protected by the following claims and their equivalents.

## Claims

1. A method for swapping program configuration data, employed to swap first program configuration data corresponding to a first program number for second program configuration data corresponding to a second program number in an electronic apparatus, the method comprising:
(a) establishing a program profile table comprising the first program number and a first primary key for mapping to the first program configuration data, and the second program number and a second primary key for mapping to the second program configuration data; and
(b) swapping the first primary key for the second primary key in the program profile table.

2. The method as claimed in claim 1 wherein the first program configuration data comprises a first index, the second program configuration data comprises a second index and, in step (a), the first and second primary keys in the program profile table are respectively linked to the first and second indices, thereby enabling the first and second program numbers in the program profile table to map to the first and second configuration data.

3. The method as claimed in claim 2 wherein, in step (b), after swapping the first primary key for the second primary key in the program profile table, the first and second program numbers are respectively linked to the second and first indices via the second and first primary keys for respectively mapping to the second and first program configuration data.

4. The method as claimed in claim 1 wherein the second configuration data comprises a second frequency, a second video standard and a second audio standard.

5. The method as claimed in claim 4, after step (b), further comprising:
(c) acquiring the second frequency of the second program configuration data from the program configuration table, and locking on to the second frequency;
(d) acquiring the second video standard of the second program configuration data from the program configuration table, and decoding video data carried by the second frequency based on the second video standard;
(e) acquiring the second audio standard of the second program configuration data from the program configuration table, and decoding audio data carried by the second frequency based on the second audio standard; and
(f) outputting the decoded video and audio data,
wherein, the orders of any two of the steps (c), (d) and (e) can be exchanged, and, before step (c), the electronic apparatus originally outputs video and audio data based on the first program configuration data.

6. The method as claimed in claim 1 wherein the electronic apparatus further stores a program status table comprising the first program number, a first valid flag, the second program number and a second valid flag, and the first and second valid flags respectively indicate whether the first and second program numbers are associated with valid frequencies.

7. The method as claimed in claim 6 wherein step (b) further comprises swapping the first valid flag corresponding to the first program number for the second valid flag corresponding to the second program number in the program status table.

8. The method as claimed in claim 1 wherein the program profile table further comprises a first reserved flag and a second reserved flag respectively indicate whether the first and second program numbers are in a reserved status or an unreserved status.

9. The method as claimed in claim 8 wherein step (b) further comprises setting the first reserved flag corresponding to the first program number, and the second reserved flag corresponding to the second program number to the unreserved statuses.

10. The method as claimed in claim 1 wherein the electronic apparatus is a CRT display, a plasma display panel (PDP) display, a liquid crystal display (LCD), an organic light-emitting diode display (OLED) or a TV box.

11. A system for swapping program configuration data, employed to swap first program configuration data corresponding to a first program number for second program configuration data corresponding to a second program number in an electronic apparatus, the system comprising:
a memory device storing the first and second program configuration data, and a program profile table comprising the first program number and a first primary key for mapping to the first program configuration data, and the second program number and a second primary key for mapping to the second program configuration data; and
a processing unit swapping the first primary key for the second primary key in the program profile table.

12. The system as claimed in claim 11 wherein the first program configuration data comprises a first index, the second program configuration data comprises a second index, and the first and second primary keys in the program profile table are respectively linked to the first and second indices, thereby enabling the first and second program numbers in the program profile table to map to the first and second configuration data.

13. The system as claimed in claim 12 wherein, after the processing unit swaps the first primary key for the second primary key in the memory device, the first and second program numbers are respectively linked to the second and first indices via the second and first primary keys for respectively mapping to the second and first program configuration data.

14. The system as claimed in claim 11 wherein the second configuration data in the memory device comprises a second frequency, a second video standard and a second audio standard.

15. The system as claimed in claim 14 wherein the processing unit further acquires the second frequency, the second video standard and the second audio standard from the second program configuration data in the memory device, the system further comprising:
a tuner for locking on to the second frequency;
a video decoder for decoding video data carried by the second frequency based on the second video standard;
an audio processor for decoding audio data carried by the second frequency based on the second audio standard; and
an output unit for outputting the decoded video and audio data.

16. The system as claimed in claim 11 wherein the memory device further stores a program status table comprising the first program number, a first valid flag, the second program number and a second valid flag, and the first and second valid flags respectively indicate whether the first and second program numbers are associated with valid frequencies.

17. The system as claimed in claim 16 wherein, after the processing unit swaps the first primary key for the second primary key in the memory device, the processing unit further swaps the first valid flag corresponding to the first program number for the second valid flag corresponding to the second program number in the program status table.

18. The system as claimed in claim 11 wherein the program profile table in the memory device further comprises a first reserved flag and a second reserved flag respectively indicate whether the first and second program numbers are in a reserved status or an unreserved status.

19. The system as claimed in claim 18 wherein, after the processing unit swaps the first primary key for the second primary key in the memory device, the processing unit further sets the first reserved flag corresponding to the first program number, and the second reserved flag corresponding to the second program number to the unreserved statuses.

20. The system as claimed in claim 11 is installed in a CRT display, a plasma display panel (PDP) display, a liquid crystal display (LCD), an organic light-emitting diode display (OLED) or a TV box.
